# EUROPÄISCHE PATENTSCHRIFT

(11) **EP 1 514 339 B1**
(45) Veröffentlichungstag und Bekanntmachung des Hinweises auf die Patenterteilung: **18.03.2009**
(21) Anmeldenummer: 03756962.1
(22) Anmeldetag: 30.05.2003
(51) Int. Cl.: H02K 7/102

(54) **ANTRIEB FÜR EINE VERSTELLEINRICHTUNG IN EINEM KRAFTFAHRZEUG**
DRIVE FOR AN ADJUSTER DEVICE IN A MOTOR VEHICLE
SYSTEME D'ENTRAINEMENT POUR DISPOSITIF DE REGLAGE DANS UN VEHICULE AUTOMOBILE

(30) Priorität: 07.06.2002 DE 10226341
(43) Veröffentlichungstag der Anmeldung: 16.03.2005
(73) Patentinhaber: Brose Fahrzeugteile GmbH & Co. KG, Coburg, 96450 Coburg (DE)
(72) Erfinder: SESSELMANN, Helmut, 96523 Steinach (DE); SCHULTZ, Markus, 90425 Nürnberg (DE)
(74) Vertreter: Baumgärtel, Gunnar
(86) Internationale Anmeldenummer: PCT/DE2003/001823
(87) Internationale Veröffentlichungsnummer: WO 2003/105315

(56) Entgegenhaltungen:
- WO-A-94/23220
- DE-A- 4 302 143
- DE-A- 19 943 692
- FR-A- 2 405 586
- US-A- 5 018 603

## Beschreibung

Die Erfindung betrifft einen Antrieb für eine Verstelleinrichtung in einem Kraftfahrzeug nach dem Oberbegriff des Patentanspruchs 1.

Ein derartiger Antrieb umfasst einen Antriebsmotor; ein um eine Antriebsachse drehbar gelagertes Antriebselement, z. B. in Form eines Läufers des Antriebsmotors; sowie eine Einrichtung zur Selbsthemmung des Antriebselementes, die im stromlosen Zustand des Antriebsmotors das Antriebselement mit einem Blockierelement blockiert.

Aus der DE 199 42 362 C1 ist ein selbsthemmender elektrischer Antrieb mit einem Elektromotor und einem nachgeschalteten Getriebe mit einem Getriebegehäuse, einer gegenüber dem Getriebegehäuse drehbaren Getriebeabtriebswelle und einer Einrichtung zur Selbsthemmung der Getriebeabtriebswelle bekannt, bei dem ein gleichzeitig mit dem Betrieb des Elektromotors elektrisch von einer ersten zu einer zweiten Position verschiebbares Hemmelement und ein gegenüber dem Getriebegehäuse feststehendes Element vorgesehen sind, wobei das Hemmelement in der ersten Position eine formschlüssige Kopplung zwischen der Getriebeabtriebswelle und dem feststehenden Element herstellt und diese Kopplung in der zweiten Position aufgehoben ist. Dabei wird das feststehende Element durch eine Getriebeachse gebildet, auf der das Hemmelement in axialer Richtung verschiebbar angeordnet ist. Mit dieser Anordnung kann ein selbsthemmender elektrischer Antrieb realisiert werden, bei dem eine ausreichend große Selbsthemmung gewährleistet ist, also verhindert wird, dass bei abgeschaltetem Elektromotor ein abtriebseitig aufgebrachtes Moment zur Antriebsseite übertragbar ist, ohne dass hierdurch der Wirkungsgrad des Antriebs zu stark beeinträchtigt wird. Die bekannte Anordnung hat jedoch den Nachteil, dass sie aufgrund der Verschiebbarkeit des Hemmelementes in axialer Richtung zur Herstellung bzw. Aufhebung der Selbsthemmung eine gewisse Ausdehnung in axialer Richtung erfordert. Dies steht dem Wunsch entgegen, insbesondere bei Flachmotoren, eine möglichst geringe Ausdehnung eines Motors in axialer Richtung zu erreichen, was aus Platzgründen bei elektrischen Antrieben für Kraftfahrzeuge von großer Bedeutung ist.

Aus der WO 94 23220 A ist ein Antrieb bekannt, bestehend aus einem Antriebsmotor, einem um eine Antriebsachse drehbar gelagerten Antriebselement und einer Einrichtung zur Selbsthemmung des Antriebselementes. Im stromlosen Zustand des Antriebsmotors wird das Antriebselement mit einem Blockierelement blockiert. Das Blockierelement ist zum Betreiben des Antriebsmotors in radialer Richtung bezüglich der Antriebsachse mit dem Antriebselement außer Eingriff bringbar.

In der DE 199 43 692 A1 wird ein Scheibenläufermotor, insbesondere für Verstelleinrichtungen in Kraftfahrzeugen beschrieben. Es wird keine Einrichtung zur Selbsthemmung des Antriebselementes angegeben.

Aus der FR 2 405 586 A ist ein rotierender elektro-mechanischer Antrieb bekannt, bei dem im stromlosen Zustand des Antriebsmotors ein Blockierelement durch magnetische Kräfte eines Permanentmagneten fixiert wird.

Der Erfindung liegt die Aufgabe zugrunde, eine möglichst einfache selbsthemmende Auslegung eines motorischen Antriebs für eine Verstelleinrichtung anzugeben.

Dieses Problem wird erfingdungsgemäß durch die Schaffung eines Antriebs mit den Merkmalen des Patentanspruchs 1 gelöst.

Danach ist das Blockierelement zum Betreiben des Antriebsmotors in radialer Richtung bezüglich der Antriebsachse mit dem Antriebselement außer Eingriff bringbar, um eine Bewegung des Antriebselementes während der Bestromung des zugeordneten Antriebsmotors zuzulassen. Das Blockierelement ist im stromlosen Zustand des Antriebsmotors durch magnetische Kräfte, die durch den Stator des Antriebsmotors erzeugt werden, in einer das Antriebselement blockierenden Position fixiert.

Das außer Eingriff Bringen des Blockierelementes kann einerseits beim Bestromen des Antriebsmotors erfolgen, z.B. indem der zum Bestromen des Antriebsmotors verwendete elektrische Strom gleichzeitig zum Betätigen des Blockierelementes verwendet wird, etwa mittels eines Elektromagneten. Andererseits kann auch vorgesehen sein, dass die Blockierung des Antriebselementes vor dem Bestromen des Motors aufgehoben wird, so dass bei Beginn des Betriebs des Motors das Blockierelement in jedem Fall außer Eingriff mit dem Antriebselement steht. Eine solche zeitliche Steuerung des Abhebens des Blockierelementes von dem Antriebselement kann insbesondere dann vorteilhaft sein, wenn das Blockierelement formschlüssig mit dem Antriebselement in Eingriff steht.

Umgekehrt kann das Blockierelement beim Abschalten des Antriebes in radialer Richtung wieder mit dem Antriebselement in Eingriff gebracht werden, so dass eine Drehbewegung des Antriebselementes um seine Antriebsachse blockiert ist und die Übertragung abtriebsseitig aufgebrachter Kräfte auf die Antriebsseite verhindert wird (Selbsthemmung). Dieses in Eingriff Bringen kann derart gesteuert werden, dass kein ruckartiger sondern ein dosierter Eingriff erfolgt, z.B. zur Vermeidung von Geräuschentwicklung.

Die erfindungsgemäße Lösung hat den Vorteil, dass sie eine Selbsthemmung ermöglicht, die einerseits den Wirkungsgrad des Antriebs nicht beeinträchtigt und die andererseits keine besondere Ausdehnung des Antriebsmotors in axialer Richtung erfordert.

Die erfindungsgemäße Lösung eignet sich daher insbesondere zur Verwendung bei Flachmotoren, die beispielsweise einen Läufer in Form eines Scheibenläufers aufweisen, wobei das Blockierelement bei Bestromung des Flachmotors in radialer Richtung von dem Antriebselement abgehoben wird, so dass die vom Flachmotor erzeugten Kräfte zu einer Drehbewegung des Antriebselementes führen. Bei Verwendung der erfindungsgemäßen Lösung für einen Flachmotor mit einem Scheibenläufer (Scheibenläufermotor), wobei das Blockierelement in radialer Richtung mit dem Läufer (der Ankerscheibe) in und außer Eingriff bringbar ist, erlaubt es der große Reibradius der Ankerscheibe mit vergleichsweise kleinen Bremskräften eine hinreichende Selbsthemmung zu gewährleisten. Die ständig zur Verfügung stehende permanentmagnetische Energie blockiert die Ankerscheibe bei nichtbestromtem Motor, das heißt, beim Aufbringen einer abtriebsseitigen Kraft, z. B. auf eine durch den Antrieb zu verstellende Fensterscheibe oder auf ein durch den Antrieb zu verstellendes Sitzteil. Die Selbsthemmung wird hierbei nicht in erster Linie über die Getriebekonfiguration erzeugt, sondern durch eine permanentmagnetische Bremse erzielt, die ohne zusätzliche Energiequelle auskommt.

Um das Blockierelement beim Bestromen des Antriebsmotors mit dem Antriebselement außer Eingriff zu bringen, kann gemäß einer Variante der Erfindung ein elastisches Element verwendet werden, das in geeigneter Weise mit dem Antriebsmotor gekoppelt ist, so dass bei Bestromung des Antriebsmotors die Blockierung des Antriebselementes aufgehoben werden kann.

In einer besonders bevorzugten Variante der Erfindung ist das Blockierelement elektrisch außer Eingriff mit dem Antriebselement bringbar.

In einer Variante der Erfindung können die magnetischen Kräfte beispielsweise durch einen Permanentmagneten erzeugt werden, der den Stator des Antriebsmotors bildet.

Hierdurch kann also ein im Motor als Stator ohnehin vorhandener Permanentmagnet zur Erzeugung der Bremskraft verwendet werden, mit der das Antriebselement bei abgeschaltetem (stromlosem) Antriebsmotor blockiert wird.

Das Blockierelement weist selbst einen ersten magnetisierbaren Abschnitt auf, durch dessen Magnetisierung das Blockierelement in einer Position fixierbar ist, in der es das Antriebselement blockiert. Der besagte erste magnetische Abschnitt definiert einen ersten magnetischen Pfad für den magnetischen Fluss, der von dem zur Fixierung des Blockierelementes verwendeten Magneten erzeugt wird und mit dem eine magnetische Kraft einhergeht, die das Blockierelement in seiner das Antriebselement blockierenden Position fixiert.

Um das Blockierelement beim Bestromen des Antriebsmotors außer Eingriff mit dem Antriebselement zu bringen, kann ein Elektromagnet verwendet werden, der z.B. gemeinsam mit dem Antriebsmotor bestromt wird und der ein magnetisches Feld erzeugt, durch dessen Fluss bzw. Kraftwirkung das Blockierelement außer Eingriff mit dem Antriebselement gebracht wird. Durch geeignete zeitliche Steuerung der Bestromung des Elektromagneten bzw. der Aufhebung des Stromes durch den Elektromagneten kann dabei der zeitliche Zusammenhang zwischen dem Beginn des Betriebes des Antriebsmotors und dem Lösen des Blockierelementes gesteuert werden sowie ein sanftes wieder Eingreifen des Blockierelementes in das Antriebselement beim Abschalten des Antriebsmotors erreicht werden.

Gemäß einer Ausführungsform der Erfindung lenkt das von dem Elektromagneten erzeugte Feld den zur Fixierung des Blockierelementes bei stromlosem Antriebsmotor dienenden magnetischen Fluss derart um, dass der resultierende magnetische Fluss das Blockierelement außer Eingriff mit dem Antriebselement bringt. Bei der Magnetfeldumlenkung wird der das Blockierelement bei stromlosem Antriebsmotor fixierende (permanentmagnetische) Fluss nach Bestromen des Motors und des Elektromagneten nicht mehr über den als Reibbremse wirkenden Rückschluss geführt, sondern es wird ein Seitenpfad für den Fluss angeboten, in dem dieser keine Fixierung des Blockierelementes in einer Position bewirkt, in der es mit dem Antriebselement in Eingriff steht. Dadurch wird die Reibbremse gelüftet und das Antriebselement kann sich frei drehen. Bei abgeschaltetem Motor wird der (permanentmagnetische) Fluss wieder über den als Bremse wirkenden Rückschluss geführt und so die Selbsthemmung wiederhergestellt.

Nach einer anderen Ausführungsform der Erfindung wird der das Blockierelement bei stromlosem Antriebsmotor fixierende (permanentmagnetische) Fluss durch das beim Bestromen des Motors mittels eines Elektromagneten erzeugte magnetische Feld derart verdrängt, dass der resultierende magnetische Fluss das Blockierelement außer Eingriff mit dem Antriebselement bringt. Bei der Magnetfeldverdrängung wird also der (permanentmagnetische) Fluss durch eine Gegenerregung verdrängt, die durch Bestromen eines Elektromagneten erzeugt wird. Die Bestromung des Elektromagneten erfolgt gleichzeitig mit Einschalten des Motors und führt zu einer Verdrängung des (permanentmagnetischen) Flusses in einen hierfür angebotenen Seitenpfad. Wenn der Motor wieder abgeschaltet wird, wird die Gegenerregung automatisch deaktiviert, und das Blockierelement wird durch den magnetischen Fluss wiederum in einer Position fixiert, in der es das Antriebselement blockiert.

Gemäß einer weiteren Variante der Erfindung sind ein Permanentmagnet, durch den das Blockierelement in einer das Antriebselement blockierenden Position fixierbar ist, sowie ein Elektromagnet bzw. die von diesen beiden Magneten erzeugten magnetischen Felder derart in einen Hybridmagnetkreis integriert, dass der permanentmagnetische Fluss den elektromagnetischen Fluss superpositioniert und das Blockierelement hierdurch zwei stabile Positionen (Endlagen) einnehmen kann, von denen die eine die Blockierung des Antriebselementes bewirkt und die andere eine Drehbewegung des Antriebselementes ermöglicht. In beiden stabilen Positionen (Endlagen) kann der Elektromagnet hierbei jeweils stromlos sein, wobei der Übergang von der einen zur anderen stabilen Position durch kurzzeitige Bestromung des Elektromagneten mit einem Stromimpuls ausgelöst wird. Im Ergebnis kann bei der vorbeschriebenen Ausführungsform der Erfindung also ein im Antrieb ohnehin vorhandener, zur Erzeugung des Statorfeldes dienender Permanentmagnet derart in einen Hybridmagnetkreis dirigiert werden, dass dessen Fluss den von einem Elektromagneten erzeugten elektromagnetischen Fluss überlagert und das Lüften bzw. Schließen der Bremse jeweils durch einen kurzen Stromimpuls beim Einschalten bzw. Ausschalten des Motors herbeigeführt wird, wobei die bei zugehörigen stabilen Positionen der Bremse, entsprechend zwei Endlagen des Blockierelementes, jeweils stromlos eingenommen werden.

Eine derartige magnetische Bremseinheit zeichnet sich wegen der permanentmagnetischen Vormagnetisierung durch kleine elektrische und mechanische Zeitkonstanten aus, das heißt der Strom und die Bremskraft steigen schnell an. Durch geeignete Veränderung des Stromes, mit dem der Elektromagnet bestromt wird, kann die Bremskraft dosiert eingebracht werden. Insbesondere kann die Bremseinheit mittels der Motorelektronik intelligent angesteuert werden, z. B. indem bei einem Einklemmvorgang eines höhenverstellbaren Fensters der Motor schneller abbremst als beim ordnungsgemäßen Einlaufen der Fensterscheibe in eine Endlage. Die zur Herstellung eines Hybridmagnetkreises zu verwendenden Hybride haben zudem den Vorteil, dass sie klein und leicht ausgebildet sind.

In einer Weiterbildung der Erfindung weist das Blockierelement ein Bremselement auf, das zur Blockierung des Antriebselementes auf dieses einwirkt, und zwar vorzugsweise als (elastisch ausgebildetes) Reibelement. Das Blockierelement bzw. dessen Bremselement ist hierzu an einer Führungseinrichtung in radialer Richtung beweglich geführt, und zwar insbesondere in radialer Richtung verschiebbar. Es kann jedoch anstelle eines kraft- bzw. reibschlüssigen Eingriffes auch ein formschlüssiger Eingriff des Blockierelementes in das Antriebselement vorgesehen sein.

Zudem kann zur Verstärkung der Bremskraft (bei kraftschlüssiger Bremswirkung) oder zur gezielten Einstellung (z.B. Verlängerung) des zum Ein- und Ausfahren des Blockierelementes erforderlichen Weges (insbesondere bei formschlüssiger Bremswirkung) das Blockierelement über einen Hebelmechanismus betätigbar sein.

Weitere Merkmale und Vorteile der Erfindung werden bei der nachfolgenden Beschreibung eines Ausführungsbeispiels anhand der Figuren deutlich werden.

Es zeigen:
- Fig. 1: eine schematische Darstellung eines Antriebsmotors für eine Verstelleinrichtung in einem Kraftfahrzeug mit einer Einrichtung zur Blockierung des Läufers im stromlosen Zustand;
- Fig. 2: einen Antriebsmotor gemäß Figur 1 bei Beginn der Bestromung des Motors;
- Fig. 3: einen Antriebsmotor gemäß Figur 1 während des Betriebs des Motors.

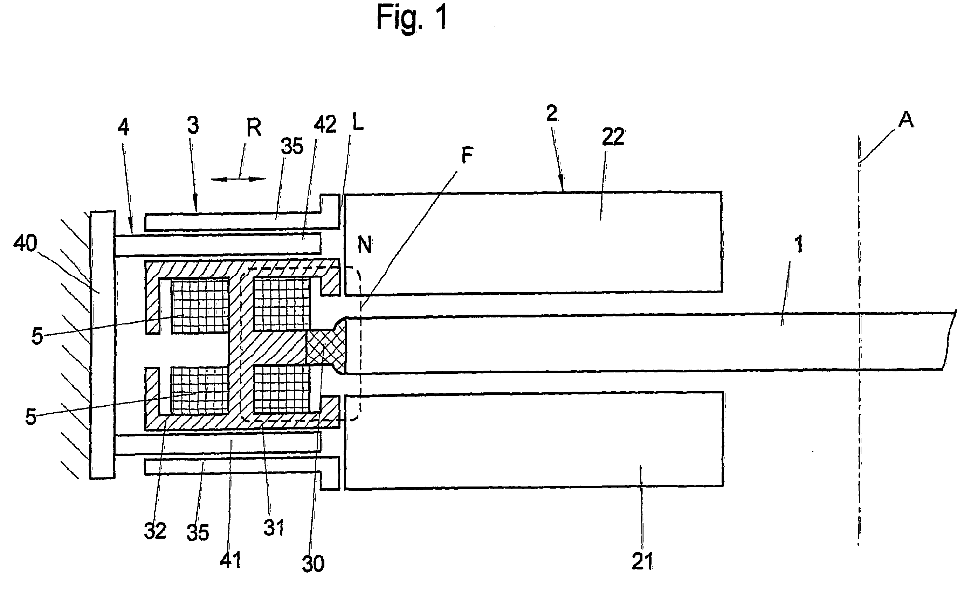

In Figur 1 sind von einem als Flachmotor ausgebildeten Antriebsmotor für eine Verstelleinrichtung in Kraftfahrzeugen, z. B. zum Verstellen einer Fensterscheibe (elektrischer Fensterheber) oder zum Verstellen eines Sitzteiles (elektrische Sitzverstelleinrichtung) ein Scheibenläufer 1 (Ankerscheibe) sowie ein durch Permanentmagnete 21, 22 gebildeter Stator 2 dargestellt. Der Scheibenläufer 1 ist um eine Achse A drehbar auf einer in Figur 1 nicht gezeigten Welle angeordnet.

Der in Figur 1 dargestellte Antriebsmotor zeichnet sich aufgrund der Ausbildung des Läufers 1 als Scheibenläufer bzw. Ankerscheibe insbesondere durch seine geringe Ausdehnung entlang der Antriebsachse A des Scheibenläufers 1 aus. Dies spielt bei Verstelleinrichtungen für Kraftfahrzeuge, z. B. in Form eines elektrischen Fensterhebers oder einer elektrischen Sitzverstelleinrichtung, eine besondere Rolle, da häufig nur wenig Bauraum für den Antriebsmotor zur Verfügung steht.

Um zu verhindern, dass bei abgeschaltetem, das heißt stromlosem Antrieb, eine abtriebsseitig, z. B. auf eine zu verstellende Fensterscheibe oder ein zu verstellendes Sitzteil aufgebrachte Kraft auf die Antriebsseite übertragen werden kann, ist dem Antriebsmotor eine Bremseinrichtung 3, 4, 5 zugeordnet, die ein Blockierelement 3, eine Führungseinrichtung 4 zur Führung des Blockierelementes 3 in radialer Richtung R bezüglich der Antriebsachse A sowie einen Elektromagneten 5 zur Betätigung des Blockierelementes 3 umfasst.

Das Blockierelement 3 umfasst ein elastisch verformbares Bremselement 30, in Form einer Reibbremse, die mit dem äußeren Rand des Scheibenläufers 1 in Eingriff bringbar ist und diesen hierdurch derart blockiert, dass er keine Drehbewegung um die Antriebsachse A ausführen kann. Das Bremselement 30 ist verbunden mit einem Körper aus magnetischem Material, der einen ersten magnetisierbaren Abschnitt 31 sowie einen zweiten magnetisierbaren Abschnitt 32 umfasst, die jeweils einen Pfad für den vom Stator 2 bzw. Elektromagneten 5 erzeugten magnetischen Fluss bilden können. Darüber hinaus umfasst das Blockierelement 3 Führungsbereiche 35, die zusammen mit den beiden Strompfaden 31, 32 an einem aus zwei längserstreckten Führungsteilen 41, 42 bestehenden Führungselement 4 in radialer Richtung R verschieblich geführt sind. Auf ihrer dem Scheibenläufer 1 und Stator 2 abgewandten Seite ist an der Führungseinrichtung 4 eine magnetische Platte 40 angeordnet.

Der Elektromagnet 5 ist derart mit dem Blockierelement 3 verbunden, dass er gemeinsam mit diesem in radialer Richtung R bezüglich der Antriebsachse A verschiebbar ist.

Figur 1 zeigt den elektrischen Antriebsmotor 1, 2 im abgeschalteten, das heißt stromlosen Zustand. In diesem Fall ist auch der Elektromagnet 5 stromlos. Der magnetische Fluss F wird daher ausschließlich durch den Permanentmagneten 21, 22 des Stators 2 erzeugt. Der magnetische Fluss F erstreckt sich durch den kürzesten zur Verfügung stehenden Pfad, nämlich den ersten Pfad 31 des Blockierelementes 3. Hierdurch wird eine magnetische Kraft erzeugt, die das Bremselement 30 in Richtung auf den Antriebsmotor 1, 2 bewegt, so dass das elastisch deformierbare Bremselement 30 gegen den äußeren Rand des Scheibenläufers 1 drückt und diesen durch Reibwirkung blockiert. Der Scheibenläufer 1 kann sich hierdurch nicht um seine Antriebsachse A drehen und die Übertragung eines abtriebseitig aufgebrachten Momentes auf die Antriebsseite ist ausgeschlossen. Dies entspricht einer Selbsthemmung des Antriebsmotors 1, 2 im stromlosen Zustand. Der Arbeitsluftspalt L zwischen dem äußeren Rand des Antriebsmotors 1, 2 und dem Blockierelement 3 ist hierbei minimiert.

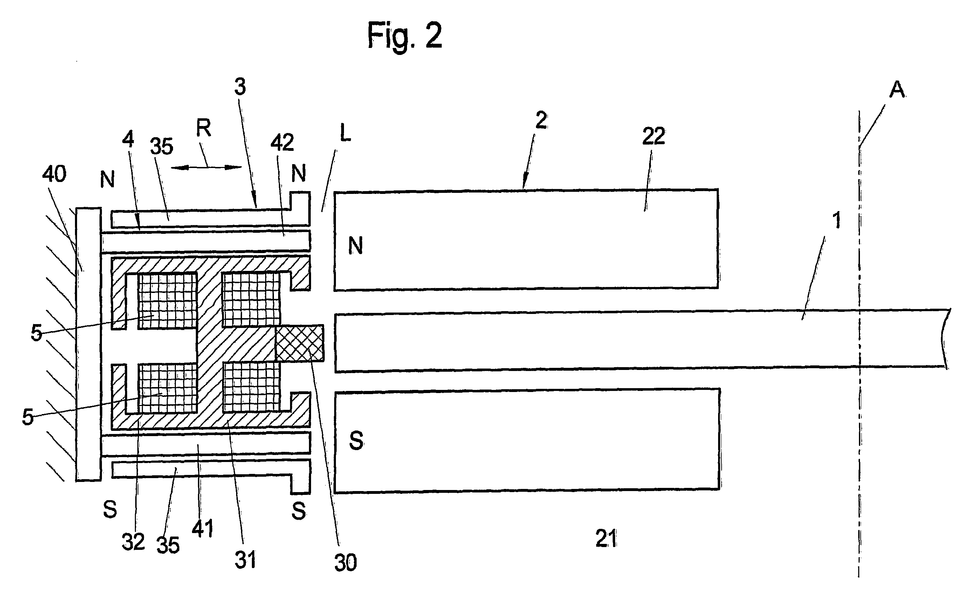

Figur 2 zeigt den Antriebsmotor 1, 2 aus Figur 1 beim Einschalten des Antriebsmotors, das heißt zu Beginn der Bestromung des Antriebsmotors 1, 2, wobei gleichzeitig der Elektromagnet 5 bestromt wird. Die Stromrichtung des durch den Elektromagneten 5 fließenden Stromes ist dabei so gewählt, dass der vom Elektromagneten 5 erzeugte magnetische Fluss gegensinnig zu dem vom Permanentmagneten 21, 22 erzeugten magnetischen Fluss verläuft und diesen somit verdrängt (Magnetfeldverdrängung). Im Bereich des Arbeitsluftspaltes L zwischen dem äußeren Rand des Antriebsmotors 1, 2 und dem Blockierelement 3 sind der Permanentmagnet 21, 22 einerseits und der dem äußeren Rand des Antriebsmotors 1, 2 zugewandte erste magnetische Abschnitt 31 des Blockierelementes 3 derart gegensinnig magnetisiert, dass das Bremselement 3 in radialer Richtung R abgestoßen wird und der Arbeitsluftspalt L sich vergrößert. Hierdurch wird die die Selbsthemmung im stromlosen Zustand des Antriebsmotors 1, 2 gewährleistende Bremse gelüftet.

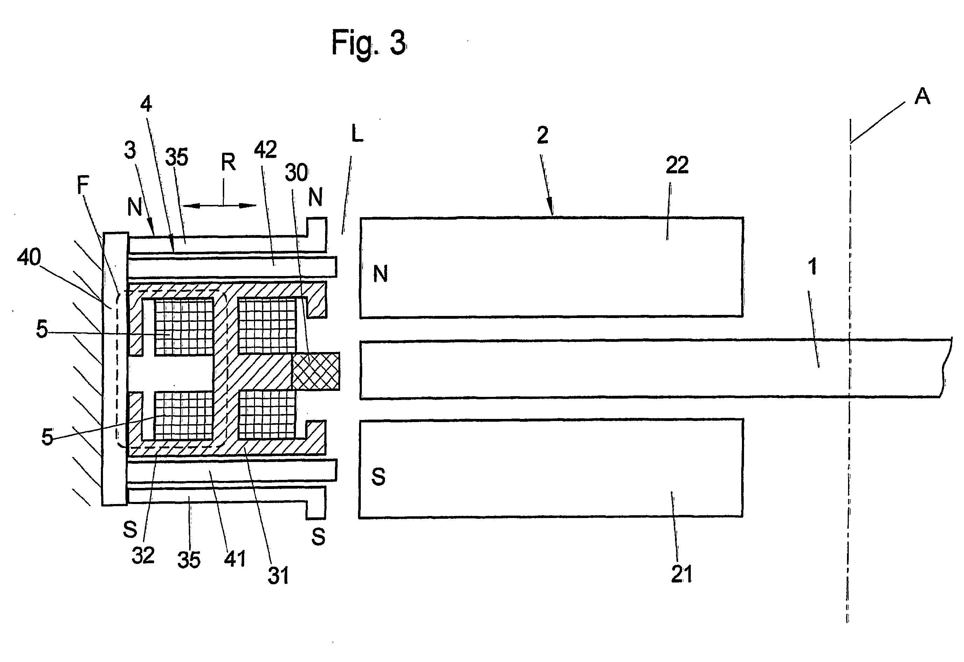

In dem in Figur 3 gezeigten Zustand ist die Bremse vollständig geöffnet. Der von dem Permanentmagneten 21, 22 und dem Elektromagneten 5 erzeugte resultierende magnetische Fluss F erstreckt sich nun durch einen Seitenpfad, der durch den zweiten magnetischen Abschnitt 32 des Blockierelementes 3 sowie den plattenförmigen Abschnitt 40 der Führungseinrichtung 4 gebildet wird. Hierdurch wird das Blockierelement 3 in einer radialen Position fixiert, in der sich das Bremselement 30 außer Eingriff mit dem Scheibenläufer 1 befindet, so dass sich dieser sich frei um die Antriebsachse A drehen kann und ein antriebsseitig aufgebrachtes Moment auf die Abtriebsseite übertragen werden kann.

Sehr ähnliche Bedingungen wie vorstehend anhand der Magnetfeldverdrängung beschrieben liegen bei der sogenannten Magnetfeldumlenkung vor. Hierbei wird ein Schalter (magnetische Weiche) elektrisch betätigt und der magnetische Fluss hierdurch über einen zweiten Flussweg gelenkt.

Außerdem erfüllt die Anordnung gemäß den Figuren 1 bis 3 auch die Anforderungen an einen Aufbau mit Hybridmagneten mit zwei stabilen Endlagen, die im stromlosen Zustand eingenommen werden können. Das Aktivieren bzw. Deaktivieren der Bremse erfolgt z.B. über einen kurzen Stromimpuls nach dem Flip-Flop-Prinzip.

Die in den Figuren 1 bis 3 dargestellte Bremseinrichtung 3, 4, 5 für einen Scheibenläufermotor 1, 2 hat den Vorteil, dass sie einerseits im stromlosen Zustand eine zuverlässige Selbsthemmung des Antriebes bewirkt, ohne den Wirkungsgrad im Betrieb des Motors zu beeinflussen und dass sie andererseits die Ausdehnung des Flachmotors 1, 2 in axialer Richtung, also entlang der Antriebsachse A, nicht beeinflusst.

## Patentansprüche

1. Antrieb für eine Verstelleinrichtung in einem Kraftfahrzeug mit
- einem Antriebsmotor (1, 2) mit einem Stator (2),
- einem um eine Antriebsachse (A) drehbar gelagerten Antriebselement (1) und
- einer Einrichtung zur Selbsthemmung des Antriebselementes (1), die im stromlosen Zustand des Antriebsmotors (1, 2) das Antriebselement (1) mit einem Blockierelement (3) blockiert,
**dadurch gekennzeichnet,**
**dass** das Blockierelement (3) zum Betreiben des Antriebsmotors (1, 2) in radialer Richtung (R) bezüglich der Antriebsachse (A) mit dem Antriebselement (1) außer Eingriff bringbar ist und dass das Blockierelement (3) im stromlosen Zustand des Antriebsmotors (1, 2) durch magnetische Kräfte, die durch den Stator (2) des Antriebsmotors (1, 2) erzeugt werden, in einer das Antriebselement blockierenden Position fixiert ist.

2. Antrieb nach Anspruch 1, **dadurch gekennzeichnet, dass** das Blockierelement (3) in radialer Richtung (R) von dem Antriebselement (1) abgehoben wird.

3. Antrieb nach Anspruch 1 oder 2, **dadurch gekennzeichnet, dass** das Antriebselement (1) durch einen Läufer des Antriebsmotors (1, 2) gebildet wird.

4. Antrieb nach Anspruch 3, **dadurch gekennzeichnet, dass** das Antriebselement (1) als Scheibenläufer ausgebildet ist.

5. Antrieb nach einem der Ansprüche 1 bis 4, **dadurch gekennzeichnet, dass** das Blockierelement (3) mittels eines elastischen Elementes mit dem Antriebselement (1) außer Eingriff bringbar ist.

6. Antrieb nach einem der Ansprüche 1 bis 4, **dadurch gekennzeichnet, dass** das Blockierelement (3) elektrisch außer Eingriff mit dem Antriebselement (1) bringbar ist.

7. Antrieb nach einem der vorhergehenden Ansprüche , **dadurch gekennzeichnet, dass** die magnetischen Kräfte durch einen Permanentmagneten (21, 22) erzeugt werden.

8. Antrieb nach einem der vorhergehenden Ansprüche, **dadurch gekennzeichnet, dass** das Blockierelement (3) einen ersten magnetischen Abschnitt (31) aufweist.

9. Antrieb nach Anspruch8, **dadurch gekennzeichnet, dass** durch Magnetisierung des ersten magnetischen Abschnittes (31) das Blockierelement (3) in einer das Antriebselement (1) blockierenden Position fixierbar ist.

10. Antrieb nach Anspruch9, **dadurch gekennzeichnet, dass** der erste magnetische Abschnitt (31) einen ersten magnetischen Pfad für magnetischen Fluss (F) definiert.

11. Antrieb nach einem der Ansprüche 1 bis 7 und einem der Ansprüche 8 bis 10, **dadurch gekennzeichnet, dass** in dem ersten magnetischen Abschnitt (31) ein magnetischer Fluss (F) verläuft, durch den das Blockierelement (3) in einer das Antriebselement (1) blockierenden Position fixierbar ist.

12. Antrieb nach einem der vorhergehenden Ansprüche, **dadurch gekennzeichnet, dass** das Blockierelement (3) durch Bestromung eines Elektromagneten (5) außer Eingriff mit dem Antriebselement (1) bringbar ist.

13. Antrieb nach Anspruch 12, **dadurch, gekennzeichnet, dass** der Elektromagnet (5) zeitgleich mit dem Antriebsmotor (1, 2) bestromt wird.

14. Antrieb nach Anspruch 11 oder 12, **dadurch gekennzeichnet, dass** der Elektromagnet (5) ein magnetisches Feld erzeugt, durch das das Blockierelement (3) außer Eingriff mit dem Antriebselement (1) gebracht wird.

15. Antrieb nach Anspruch 11 und 14, **dadurch gekennzeichnet, dass** das durch den Elektromagneten (5) erzeugte magnetische Feld den magnetischen Fluss derart umlenkt, dass der resultierende magnetische Fluss (F) das Blockierelement (3) außer Eingriff mit dem Antriebselement (1) bringt.

16. Antrieb nach Anspruch 11 und 14, **dadurch gekennzeichnet, dass** das von dem Elektromagneten (5) erzeugte magnetische Feld den magnetischen Fluss derart verdrängt, dass der resultierende magnetische Fluss (F) das Blockierelement (3) außer Eingriff mit dem Antriebselement (1) bringt.

17. Antrieb nach Anspruch 14 oder 15, **dadurch gekennzeichnet, dass** der resultierende magnetische Fluss (F) in einem Nebenpfad eines zweiten magnetischen Abschnittes (32) des Blockierelementes verläuft.

18. Antrieb nach Anspruch 7 und einem der Ansprüche 12 bis 14, **dadurch gekennzeichnet, dass** der Permanentmagnet (3) und der Elektromagnet (5) derart in einen Hybridmagnetkreis integriert sind, dass der permanentmagnetische Fluss den elektromagnetischen Fluss superpositioniert und das Blockierelement (3) hierdurch zwei stabile Positionen einnehmen kann, wobei in der einen stabilen Position das Antriebselement (1) durch das Blockierelement (3) blockiert ist und in der anderen stabilen Position das Blockierelement (3) außer Eingriff mit dem Antriebselement (1) steht.

19. Antrieb nach Anspruch18, **dadurch gekennzeichnet, dass** der Elektromagnet (5) in beiden stabilen Positionen des Blockierelementes (3) jeweils stromlos ist.

20. Antrieb nach Anspruch 18 oder19, **dadurch gekennzeichnet, dass** der Übergang von der einen in die andere stabile Position durch Bestromung des Elektromagneten (5) mit einem Stromimpuls auslösbar ist.

21. Antrieb nach einem der vorhergehenden Ansprüche, **dadurch gekennzeichnet, dass** das Blockierelement (3) ein Bremselement (30) aufweist, das zur Blockierung des Antriebselementes (1) auf dieses einwirkt.

22. Antrieb nach Anspruch 21, **dadurch gekennzeichnet, dass** das Bremselement (30) reibend auf das Antriebselement (1) einwirkt.

23. Antrieb nach einem der vorhergehenden Ansprüche, **dadurch gekennzeichnet, dass** das Blockierelement (3) an einer Führungsvorrichtung (4) in radialer Richtung (R) beweglich geführt ist.

24. Antrieb nach einem der vorhergehenden Ansprüche, **dadurch gekennzeichnet, dass** das Blockierelement (3) in radialer Richtung (R) verschiebbar ist.

## Claims

1. Drive for an adjuster device in a motor vehicle with
- a drive motor (1, 2) with a stator (2)
- a drive element (1) mounted rotatable about a drive axis (A) and
- a device for the self-locking of the drive element (1) which in the de-energised state of the drive motor (1, 2) locks the drive element (1) with a locking element (3)
**characterised in that**
the locking element (3) for operating the drive motor (1, 2) can be brought out of engagement with the drive element (1) in the radial direction (R) relative to the drive axis (A) and that the locking element (3) in the de-energised state of the drive motor (1, 2) is fixed by magnetic forces which are generated through the stator (2) of the drive motor (1, 2) in a position which locks the drive element..

2. Drive according to claim 1 **characterised in that** the locking element (3) is lifted in the radial direction (R) from the drive element (1).

3. Drive according to claim 1 or 2 **characterised in that** the drive element (1) is formed by a rotor of the drive motor (1, 2).

4. Drive according to claim 3 **characterised in that** the drive element (1) is formed as a disc rotor.

5. Drive according to one of claims 1 to 4 **characterised in that** the locking element (3) can be brought out of engagement with the drive element (1) by means of an elastic element.

6. Drive according to one of claims 1 to 4 **characterised in that** the locking element (3) can be brought electrically out of engagement with the drive element (1).

7. Drive according to one of the preceding claims **characterised in that** the magnetic forces are generated by a permanent magnet (21, 22).

8. Drive according to one of the preceding claims **characterised in that** the locking element (3) has a first magnetic section (31).

9. Drive according to claim 8 **characterised in that** through magnetising the first magnetic section (31) the locking element (3) can be fixed in a position which locks the drive element (1).

10. Drive according to claim 9 **characterised in that** the first magnetic section (31) defines a first magnetic path for magnetic flux (F).

11. Drive according to one of claims 1 to 7 and one of claims 8 to 10 **characterised in that** in the first magnetic section (31) runs a magnetic flux (F) through which the locking element (3) can be fixed in a position locking the drive element (1).

12. Drive according to one of the preceding claims **characterised in that** the locking element (3) can be brought out of engagement with the drive element (1) by energising an electromagnet (5).

13. Drive according to claim 12 **characterised in that** the electromagnet (5) is energised at the same time as the drive motor (1,2).

14. Drive according to claim 11 or 12 **characterised in that** the electromagnet (5) generates a magnetic field through which the locking element (3) is brought out of engagement with the drive element (1).

15. Drive according to claim 11 and 14 **characterised in that** the magnetic field generated through the electromagnet (5) diverts the magnetic flux so that the resulting magnetic flux (F) brings the locking element (3) out of engagement with the drive element (1).

16. Drive according to claim 11 and 14 **characterised in that** the magnetic field generated by the electromagnet (5) displaces the magnetic flux so that the resulting magnetic flux (F) brings the locking element (3) out of engagement with the drive element (1).

17. Drive according to claim 14 or 15 **characterised in that** the resulting magnetic flux (F) runs in a side path of a second magnetic section (32) of the locking element.

18. Drive according to claim 7 and one of claims 12 to 14 **characterised in that** the permanent magnet (3) and the electromagnet (5) are integrated in a hybrid magnetic circuit so that the permanent magnetic flux superimposes the electromagnetic flux and the locking element (3) can hereby occupy two stable positions wherein in the one stable position the drive element (1) is locked by the locking element (3) and in the other stable position the locking element (3) is out of engagement with the drive element (1).

19. Drive according to claim 18 **characterised in that** the electromagnet (5) is each time de-energised in both stable positions of the locking element (3).

20. Drive according to claim 18 or 19 **characterised in that** the transition from one stable position into the other stable position can be triggered by energising the electromagnet (5) with a current impulse.

21. Drive according to one of the preceding claims **characterised in that** the locking element (3) has a brake element (30) which in order to lock the drive element (1) acts on same.

22. Drive according to claim 21 **characterised in that** the brake element (30) acts with friction on the drive element (1).

23. Drive according to one of the preceding claims **characterised in that** the locking element (3) is guided movable in the radial direction (R) on a guide device (4).

24. Drive according to one of the preceding claims **characterised in that** the locking element (3) is displaceable in the radial direction (R).

## Revendications

1. Système d'entraînement pour dispositif de réglage dans un véhicule automobile, comprenant
- un moteur d'entraînement (1, 2) avec un stator (2),
- un élément d'entraînement (1) pivotant autour d'un axe d'entraînement (A), et
- un dispositif pour le blocage automatique de l'élément d'entraînement (1), qui bloque à l'état hors tension du moteur d'entraînement (1, 2) l'élément d'entraînement (1) à l'aide d'un élément de blocage (3),
**caractérisé en ce que**
pour exploiter le moteur d'entraînement (1, 2), l'élément de blocage (3) peut être désenclenché de l'élément d'entraînement (1) dans une direction radiale (R) par rapport à l'axe d'entraînement (A), et **en ce qu'**à l'état hors tension du moteur d'entraînement (1, 2), l'élément de blocage (3) peut être fixé dans une position bloquant l'élément d'entraînement, par des forces magnétiques qui sont générées par le stator (2) du moteur d'entraînement (1, 2).

2. Système d'entraînement selon la revendication 1, **caractérisé en ce que** l'élément de blocage (3) est décollé de l'élément d'entraînement (1) dans la direction radiale (R).

3. Système d'entraînement selon la revendication 1 ou 2, **caractérisé en ce que** l'élément d'entraînement (1) est formé par un rotor du moteur d'entraînement (1, 2).

4. Système d'entraînement selon la revendication 3, **caractérisé en ce que** l'élément d'entraînement (1) est réalisé comme un rotor intégral.

5. Système d'entraînement selon l'une quelconque des revendications 1 à 4, **caractérisé en ce que** l'élément de blocage (3) peut être désenclenché de l'élément d'entraînement (1) au moyen d'un élément élastique.

6. Système d'entraînement selon l'une quelconque des revendications 1 à 4, **caractérisé en ce que** l'élément de blocage (3) peut être désenclenché de l'élément d'entraînement (1) de façon électrique.

7. Système d'entraînement selon l'une quelconque des revendications précédentes, **caractérisé en ce que** les forces magnétiques sont générées par un aimant permanent (21,22).

8. Système d'entraînement selon l'une quelconque des revendications précédentes, **caractérisé en ce que** l'élément de blocage (3) présente une première portion magnétique (31).

9. Système d'entraînement selon la revendication 8, **caractérisé en ce que** l'aimantation de la première portion magnétique (31) permet de fixer l'élément de blocage (3) dans une position bloquant l'élément d'entraînement (1).

10. Système d'entraînement selon la revendication 9, **caractérisé en ce que** la première portion magnétique (31) définit un premier chemin magnétique pour le flux magnétique (F).

11. Système d'entraînement selon l'une quelconque des revendications 1 à 7 et l'une quelconque des revendications 8 à 10, **caractérisé en ce que** dans la première portion magnétique (31) passe un flux magnétique (F) par lequel l'élément de blocage (3) peut être fixé dans une position bloquant l'élément d'entraînement (1).

12. Système d'entraînement selon l'une quelconque des revendications précédentes, **caractérisé en ce que** l'élément de blocage (3) peut être désenclenché de l'élément d'entraînement (1) par une mise sous tension d'un électroaimant (5).

13. Système d'entraînement selon la revendication 12, **caractérisé en ce que** l'électroaimant (5) est mis sous tension en même temps que le moteur d'entraînement (1,2).

14. Système d'entraînement selon la revendication 11 ou 12, **caractérisé en ce que** l'électroaimant (5) génère un champ magnétique par lequel l'élément de blocage (3) est désenclenché de l'élément d'entraînement (1).

15. Système d'entraînement selon la revendication 11 et 14, **caractérisé en ce que** le champ magnétique généré par l'électroaimant (5) dévie le flux magnétique de telle sorte que le flux magnétique résultant (F) désenclenche l'élément de blocage (3) de l'élément d'entraînement (1).

16. Système d'entraînement selon la revendication 11 et 14, **caractérisé en ce que** le champ magnétique généré par l'électroaimant (5) refoule le flux magnétique de telle sorte que le flux magnétique résultant (F) désenclenche l'élément de blocage (3) de l'élément d'entraînement (1).

17. Système d'entraînement selon la revendication 14 ou 15, **caractérisé en ce que** le flux magnétique résultant (F) passe par un trajet secondaire d'une deuxième portion magnétique (32) de l'élément de blocage.

18. Système d'entraînement selon la revendication 7 et l'une quelconque des revendications 12 à 14, **caractérisé en ce que** l'aimant permanent (3) et l'électroaimant (5) sont intégrés dans un circuit magnétique hybride de telle sorte que le flux magnétique permanent se superpose au flux électromagnétique et permet ainsi à l'élément de blocage (3) d'adopter deux positions stables, dans lequel, dans l'une des positions stables, l'élément d'entraînement (1) est bloqué par l'élément de blocage (3), et dans l'autre position stable, l'élément de blocage (3) est désenclenché de l'élément d'entraînement (3).

19. Système d'entraînement selon la revendication 18, **caractérisé en ce que** l'électroaimant (5) est respectivement hors tension dans les deux positions stables de l'élément de blocage (3).

20. Système d'entraînement selon la revendication 18 ou 19, **caractérisé en ce que** la transition d'une position stable à l'autre peut être déclenchée par la mise sous tension de l'électroaimant (5) avec une impulsion de courant.

21. Système d'entraînement selon l'une quelconque des revendications précédentes, **caractérisé en ce que** l'élément de blocage (3) présente un élément de freinage (30) qui agit sur l'élément d'entraînement (1) pour le bloquer.

22. Système d'entraînement selon la revendication 21, **caractérisé en ce que** l'élément de freinage (30) produit un effet de friction sur l'élément d'entraînement (1).

23. Système d'entraînement selon l'une quelconque des revendications précédentes, **caractérisé en ce que** l'élément de blocage (3) est guidé sur un dispositif de guidage (4) de façon mobile dans la direction radiale (R).

24. Système d'entraînement selon l'une quelconque des revendications précédentes, **caractérisé en ce que** l'élément de blocage (3) est mobile dans la direction radiale (R).
